# EUROPÄISCHE PATENTSCHRIFT

(11) **EP 3 826 809 B1**
(45) Veröffentlichungstag und Bekanntmachung des Hinweises auf die Patenterteilung: **30.08.2023**
(21) Anmeldenummer: 19755799.4
(22) Anmeldetag: 04.07.2019
(51) Int. Cl.: B25B 11/00

(54) **MONTAGEVORRICHTUNG UND VERFAHREN ZUR VALIDIERBAREN FIXIERUNG**
MOUNTING DEVICE AND METHOD FOR VALIDATABLE FIXING
DISPOSITIF DE MONTAGE ET PROCÉDÉ DE BLOCAGE CERTIFIABLE

(30) Priorität: 23.07.2018 DE 102018005743
(43) Veröffentlichungstag der Anmeldung: 02.06.2021
(73) Patentinhaber: Xenios AG, 74076 Heilbronn (DE)
(72) Erfinder: RAU, Michael, 74177 Bad Friedrichshall (DE); FILIPON, Sven, 74080 Heilbronn (DE)
(74) Vertreter: Graf von Stosch Patentanwaltsgesellschaft mbH
(86) Internationale Anmeldenummer: PCT/DE2019/000175
(87) Internationale Veröffentlichungsnummer: WO 2020/020390

(56) Entgegenhaltungen:
- WO-A1-2012/059755
- DE-A1-102007 012 889
- DE-U1-202010 000 448
- DE-U1-202011 106 596
- DE-U1-202013 011 224

## Beschreibung

Die Erfindung betrifft eine Montagevorrichtung zur Befestigung eines Bauteils wie insbesondere einer Halterung an einem definierten Ort.

Zum Transport von Produkten in einer Verpackung ist es häufig notwendig, das Produkt verrutschsicher in der Verpackung zu halten. Dafür sind Einsätze bekannt, die häufig aus einem Schaumstoff oder Pappe bestehen und an das Produkt so angepasst sind, dass ein in die Verpackung gestelltes Produkt innerhalb der Verpackung verrutschsicher gehalten wird.

Es ist auch bekannt in einem Behälter, wie beispielsweise einem Blister Zurrösen und Zurrbänder an die Innenseite des Blisters anzukleben, um damit das Produkt im Blister positionsgenau zu halten.

Aus der DE 10 2007 012889 A1 ist eine Vorrichtung nach dem Oberbegriff von Anspruch 1 bekannt.

Derartige Lösungen sind entweder materialaufwendig oder arbeitsaufwendig beim Anbringen der Halteeinrichtungen in der Verpackung und bei der sicheren Positionierung und dem sicheren Halten des Produktes in der Verpackung.

Der Erfindung liegt daher die Aufgabe zugrunde, eine Montagevorrichtung vorzuschlagen, mit der individuell und reproduzierbar gegebenenfalls auch unterschiedlich geformte Bauteile in einer Verpackung sicher gehalten werden können.

Diese Aufgabe wird mit einer Montagevorrichtung mit den Merkmalen des Patentanspruchs 1 gelöst.

Die Aufgabe wird auch mit einem Verfahren zur validierbaren Fixierung eines Bauteils, wie insbesondere einer Halterung an einem definierten Ort, mit den Merkmalen des Patentanspruchs 14 gelöst.

Vorteilhafte Weiterbildungen sind Gegenstand der Unteransprüche.

Die Aufnahme stellt sicher, dass das Bauteil wie insbesondere eine Halterung präzise relativ zum Grundkörper in einer definierten Position gehalten werden kann. Die Saugeinrichtung ermöglicht es, den Grundkörper mit der Aufnahme an einem definierten Ort zu halten. Dies ist in der Regel eine vorbestimmte Position innerhalb einer Verpackung. Schließlich ermöglicht die Presseinrichtung, das in der Aufnahme gehaltene Bauteil an den definierten Ort zu pressen, um das Bauteil dort form- oder kraftschlüssig zu halten und insbesondere anzukleben.

Die Montagevorrichtung ermöglicht es somit dem Benutzer, beispielsweise eine Halterung auf einfache Art und Weise an einem bestimmten Ort präzise anzubringen und dort zu befestigen. Insbesondere für den Transport von leicht zu beschädigenden Produkten innerhalb einer Umverpackung erleichtert die Montagevorrichtung das Halten des Produktes innerhalb der Verpackung beispielsweise mit Montagebändern, die definiert innerhalb der Verpackung angeordnet und gespannt sind. Dadurch wird sichergestellt, dass die Produkte auch bei einer unsachgemäßen Behandlung der Verpackung während des Transports nicht beschädigt werden.

Die Montagevorrichtung kann zur Befestigung von Bauteilen an beliebigen Orten dienen. Vorteilhaft ist es jedoch, wenn der definierte Ort innerhalb eines Hohlraums einer Verpackung ist. Auch bei schlechter Zugänglichkeit innerhalb einer Verpackung ermöglicht die Montagevorrichtung das definierte Anbringen von Halterungen.

Um dem Grundkörper und damit auch das in der Aufnahme des Grundkörpers gehaltene Bauteil in einer bestimmten Position relativ zu einer Wandung, beispielsweise einer Verpackung oder eines Blisters, anordnen zu können, umfasst die Vorrichtung mindestens ein Höhenanschlag. Dieser Höhenanschlag kann ein relativ zum Grundkörper verschiebbarer Stab sein, der vorzugsweise über eine am Stab oder am Grundkörper vorgesehene Skala in seiner Position relativ zum Grundkörper genau eingestellt und fixiert werden kann. Dies ermöglicht es, bei einer manuellen Bedienung der Montagevorrichtung über den Anschlag zu fühlen, ob der Grundkörper und somit auch das Bauteil am definierten Ort positioniert sind.

Insbesondere wenn spezielle Abstände des Höhenanschlags relativ zum Grundkörper wiederholt verwendet werden, ist es vorteilhaft, wenn der Höhenanschlag eine Raste aufweist, um mindestens eine Rastposition des Höhenanschlags relativ zum Grundkörper festzulegen. Vorzugsweise hat der Höhenanschlag mehrere beabstandete Rastpositionen, die die Positionierung des Grundkörpers innerhalb einer Verpackung erleichtern.

Um das Bauteil an einem definierten Ort zu befestigen, ist es insbesondere bei einer Befestigung mittels eines Klebemittels vorteilhaft, wenn die Aufnahme ein Druckelement aufweist, um das Bauteil mit einer definierten Kraft in der Aufnahme zu halten. Dies führt dazu, dass das Bauteil sicher in der Aufnahme gehalten wird, aber bei Aufbringen einer definierten Lösekraft, wie insbesondere einem Zug am Bauteil, aus der Aufnahme entnommen werden kann. Das Bauteil kann somit beispielsweise mit dem Grundkörper in der Aufnahme gehalten an den definierten Ort geführt werden und dort so lange gehalten werden bis ein Klebemittel zwischen dem Bauteil und dem definierten Ort abbindet, sodass beim Abziehen des Grundkörpers mit der Aufnahme vom Bauteil das Bauteil am definierten Ort verbleibt. Als Halteelement für das Halten des Bauteils mit einer definierten Kraft in der Aufnahme kann beispielsweise eine Presspassung dienen. Vorteilhaft ist jedoch beispielsweise ein flexibel gelagertes Druckelement oder ein Federmechanismus, wie beispielweise ein Kugeldruckstück in der Bauteilaufnahme, um das Bauteil in der Aufnahme zu halten.

Kumulativ oder alternativ wird vorgeschlagen, dass die Aufnahme ein Saugelement aufweist, um das Bauteil mit einer definierten Kraft in der Aufnahme zu halten. Das Saugelement kann ein passives Saugelement, wie beispielsweise ein Saugnapf, sein und es kann auch ein aktives Saugelement, wie eine an einen Unterdruck anschließbare Saugeinrichtung sein.

Insbesondere für die Verwendung unterschiedlich geformter Bauteile oder von Bauteilen unterschiedlicher Größe ist es vorteilhaft, wenn die Aufnahme einen Aufnahmebereich aufweist, dessen Maß, vorzugsweise rastend,, einstellbar ist. Wenn beispielsweise Höhe, Breite und/oder Tiefe der Aufnahme einstellbar sind, erleichtert dies die Anpassung an unterschiedliche Bauteile. Dabei kann für die Bemaßung des Aufnahmebereichs eine Skala vorgesehen sein.

Die Montagevorrichtung kann mit einem Roboter oder einer elektronischen Positioniereinrichtung verbunden sein. Insbesondere jedoch für die manuelle Positionierung von Bauteilen ist es vorteilhaft, wenn die Vorrichtung möglichst leicht ausgebildet ist. Daher wird vorgeschlagen, dass die Aufnahme und/oder der Grundkörper aus Kunststoff oder Aluminium hergestellt sind. Als Material für die Aufnahme eignet sich beispielsweise auch Polyoxymethylen.

Die Saugeinrichtung, die dazu dient, das in der Aufnahme gehaltene Bauteil am definierten Ort zu halten, kann ein beliebiger Saugnapf sein. Vorteilhaft ist es jedoch wenn diese Saugeinrichtung mindestens einen Vakuumflachsauger aufweist.

Besonders vorteilhaft ist es, wenn die Saugeinrichtung mehrere Vakuumflachsauger aufweist, deren Position relativ zum Grundkörper, vorzugsweise rastend, in definierten Positionen einstellbar ist. Dies ermöglicht die Anpassung an unterschiedliche Oberflächengeometrien durch die Positionierung der Saugeinrichtung relativ zum Grundkörper in einer definierten Höhe, Breite und/oder Tiefe.

Insbesondere für die Befestigung eines Bauteils innerhalb einer schwer zugänglichen Verpackung ist es vorteilhaft, wenn die Saugeinrichtung einen Vakuumflachsauger aufweist, der über ein Gelenk mit dem Grundkörper in Verbindung steht. Vorzugsweise weist die Saugeinrichtung mehrere derartige Gelenke mit Vakuumflachsaugem auf.

Eine derartige Saugeinrichtung kann hydraulisch oder mechanisch bedienbar sein. Besonders vorteilhaft ist es jedoch, wenn die Saugeinrichtung und/oder die Presseinrichtung pneumatisch bedienbar sind. Dies wird in der Regel über einen pneumatischen Druckzylinder realisiert. Dabei sind Saug- und/oder Presseinrichtung vorzugsweise mit einer Konnektionsstelle für mindestens eine Saug- und/oder Druckleitung verbunden.

Um die Vorgänge an der Montagvorrichtung elektronisch gesteuert ablaufen lassen zu können, wird vorgeschlagen, dass die Montagevorrichtung einen Controller aufweist. Dies ermöglicht es beispielsweise, dass die Saug- und/oder die Presseinrichtung mit dem Controller in Verbindung stehen, um Druck und/oder Zeitdauer automatisch einzustellen. Insbesondere bei einer Klebeverbindung kann dadurch sichergestellt werden, dass das Bauteil ausreichend lang und insbesondere auch mit einem ausreichenden Druck am definierten Ort gehalten wird, damit die Klebeverbindung ausreichend fest ist bevor die Aufnahme vom Bauteil abgezogen wird.

Vorteilhaft ist es, wenn die Montagevorrichtung mindestens eine Auslösereinrichtung aufweist, die mit dem Controller in Verbindung steht. Dadurch können die einzelnen Prozesse nacheinander ausgelöst werden oder es können mehrere Prozesse und insbesondere auch alle Prozesse zur Befestigung des Bauteils am definierten Ort durch die Auslöseeinrichtung begonnen werden. Beispielsweise mit einem Abzugsbügel, einem Hebel, einem Pistolenabzug oder einem Fußschalter können somit der gesamte Vorgang oder auch Peilschritte über den Controller aktiviert werden.

Eine besonders vorteilhafte Ausgestaltung sieht vor, dass die Auslöseeinrichtung einen Kontaktschalter aufweist. Dies ermöglicht es, beispielsweise über einen Sensor oder über eine mechanische Auslösung den Prozess zu starten, wenn das Bauteil an eine Oberfläche am definierten Ort gedrückt wird.

Insbesondere wenn der Grundkörper beispielsweise über elektrische und/oder pneumatische Leitungen mit einem Versorgungsbereich in Verbindung steht, kann der Controller am Versorgungsbereich angeordnet werden. Vorteilhaft ist es jedoch, wenn der Controller mit dem Grundkörper eine mobile Einheit bildet. Damit kann der Controller direkt am Grundkörper die Prozessschritte auslösen und überwachen.

Unabhängig von der Anordnung des Controllers ist es vorteilhaft, wenn der Controller ein Display aufweist. Darauf können beispielsweise die aktuelle noch notwendige Haltedauer oder der aktuelle Prozessschritt angezeigt werden.

Um die Montagevorrichtung möglichst leicht und mobil auszugestalten, wird vorgeschlagen, dass die Montagevorrichtung für die Saugeinrichtung und die Presseinrichtung nur eine Druckleitung als Versorgungsleitung aufweist. Diese Druckleitung kann unter Überdruck oder Unterdruck stehen, um damit über eine Ventilsteuerung den Saugdruck für die Saugeinrichtung und gegebenenfalls auch einen Überdruck zur Verfügung zu stellen.

Die Mobilität kann auch dadurch verbessert werden, dass die Saugeinrichtung und/oder die Presseinrichtung mit einem tragbaren Druckbehälter in Verbindung stehen. Dieser Druckbehälter kann auch fest mit dem Grundkörper verbunden sein, um eine kompakte mobile Einheit zur Verfügung zu stellen.

Das Bauteil kann bereits mit einem Klebstoff versehen sein, der beispielsweise über das Abziehen einer Folie aktiviert wird. Die Montagevorrichtung kann jedoch auch eine Auftragseinrichtung aufweisen, um einen Klebstoff auf das Bauteil oder den definierte Ort aufzubringen.

Dafür wird vorgeschlagen, dass die Auftragseinrichtung einen Verteilmechanismus, wie beispielsweise eine Düse, einen Spatel oder eine Pressfläche aufweist, um den Kleber entweder als definiert positionierte Raupe oder flächig aufzubringen.

Für das Aufbringen eines Klebstoffs ist es vorteilhaft, wenn die Auftragseinrichtung neben der Aufnahme angeordnet ist.

Sie kann hydraulisch für die Beförderung eines Klebstoffs als Raupe oder insbesondere für einen Sprühauftrag auch pneumatisch bedienbar sein.

Die Montagevorrichtung kann einen Handgriff aufweisen, um auf möglichst einfache Weise manuell bedienbar zu sein. Dieser Handgriff kann auch Auslöseeinrichtungen und/oder Schalter aufweisen, um einzelne Prozessschritte oder den gesamten Ablauf zu aktivieren.

Eine besonders kompakte Bauform der Montagevorrichtung sieht vor, dass sie als mobile tragbare Einheit mit einem Druckerzeuger ausgebildet ist. Die Energie für den Druckerzeuger kann über eine Stromversorgungsleitung oder über eine Über- oder Unterdruckleitung zur Verfügung gestellt werden.

Eine weitere Steigerung der Mobilität wird dadurch erreicht, dass die Montagevorrichtung als mobile tragbare Einheit mit einer mobilen Stromversorgung, wie einer Batterie oder einem Akkumulator, ausgebildet ist.

Verfahrensmäßig ist es besonders vorteilhaft, wenn der Grundkörper zuerst mit der Saugeinrichtung am Ort fixiert wird, dann mit einer pneumatischen Einrichtung die Aufnahme mit dem Bauteil zum definierten Ort bewegt wird, dann die Aufnahme vom Bauteil abgezogen wird, nach einer definierten Zeit der Druck der Presseinrichtung auf das Bauteil gelöst wird und dann der Ansaugdruck der Saugeinrichtung gelöst wird.

Dabei ist es besonders vorteilhaft, wenn der Ansaugdruck der Saugeinrichtung automatisch zeitgesteuert gelöst wird. Alternativ kann der Ansaugdruck auch manuell deaktiviert werden.

Dabei ist es vorteilhaft, wenn der Ansaugdruck der Saugeinrichtung mindestens so stark ist, dass er den Grundkörper auch bei maximalem Druck der Presseinrichtung am definierten Ort hält. Durch die Einstellung der Drücke an der Saugeinrichtung der Presseinrichtung können Anpressdruck und Anpresszeit definiert eingestellt werden. Dies erfolgt vorzugsweise über einen Controller.

Um sicherzustellen, dass das Bauteil auch am richtigen Ort befestigt wird, wird vorgeschlagen, dass der Grundkörper mit einem Höhenanschlag am definierten Ort positioniert wird. Dies erleichtert insbesondere die manuelle Bedienung.

Die Montagevorrichtung und das erfindungsgemäße Verfahren werden im Folgenden anhand eines Ausführungsbeispiels näher beschrieben. Es zeigt
- Figur 1: eine Draufsicht auf eine Montagevorrichtung,
- Figur 2: eine Seitenansicht der in Figur 1 gezeigten Montagevorrichtung,
- Figur 3: die Unterseite der in Figur 1 gezeigten Montagevorrichtung,
- Figur 4: eine seitliche Ansicht von unten auf die in Figur 1 gezeigte Montagevorrichtung,
- Figur 5: einen durchsichtigen Blister mit mehreren an seiner Innenseite befestigten Bauteilen,
- Figur 6: die Unterseite der in Figur 1 gezeigten Montagevorrichtung mit einem Klebstoff auf einem Bauteil,
- Figur 7: die in Figur 1 gezeigte Montageeinrichtung mit einem Abstandshalter an einem Blister,
- Figur 8: eine Draufsicht auf die Unterseite einer Montagevorrichtung mit Anschlussschläuchen und
- Figur 9: eine Montagevorrichtung mit Anschlussschläuchen an einem Blister.

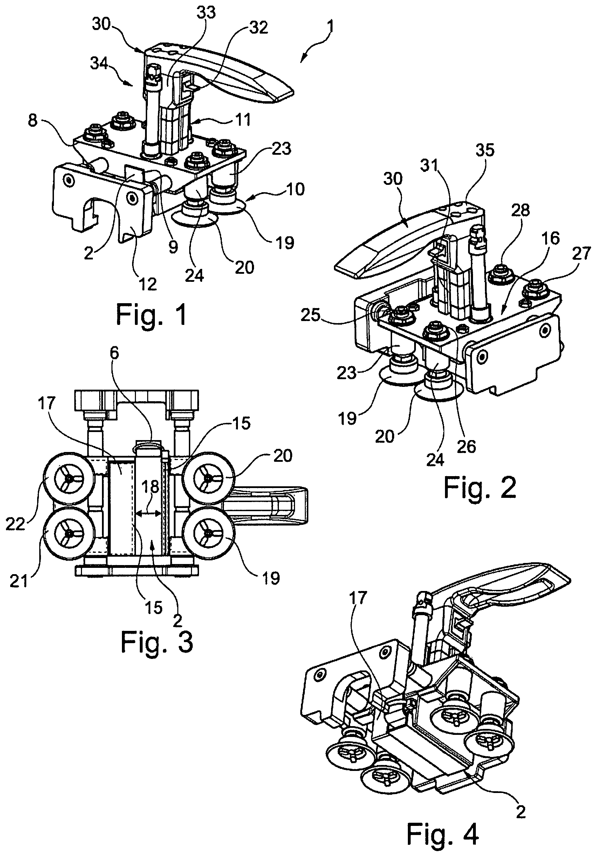

Die Figuren 1 bis 4 zeigen eine Montagevorrichtung 1 zur Befestigung eines Bauteils 2 an einem definierten Ort 3 einer Verpackung 4. Das Bauteil 2 ist eine Halterung 5, die als Rechteckrohr ausgebildet ist und in der ein Gurt oder Band 6 angeordnet sein kann.

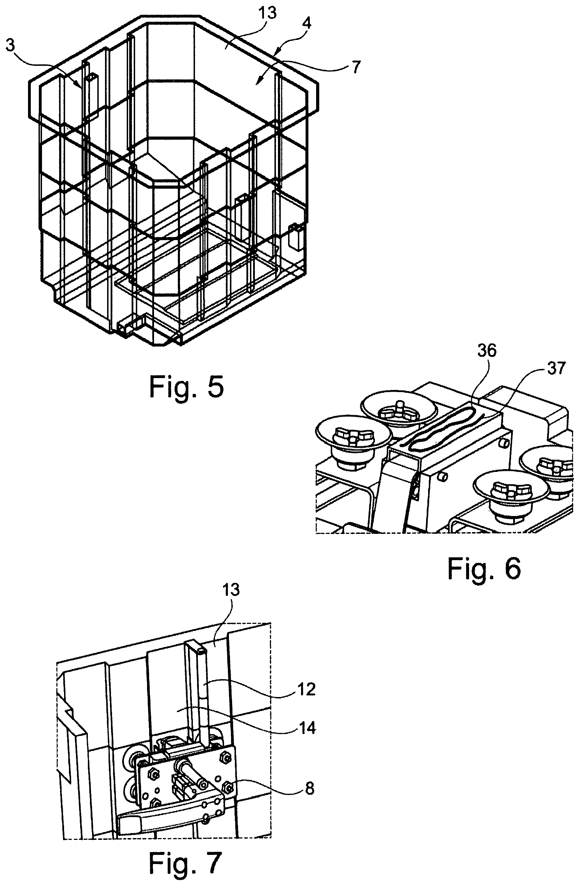

Die in Figur 5 gezeigte Verpackung 4 ist ein Blister mit einem Hohlraum 7, in dem Produkte transportiert werden können, die während des Transports in der Verpackung 4 fixiert werden müssen. Hierzu können als Bauteil 5 Zurrösen und Klettbänder verwendet werden. Diese Bauteile werden reproduzierbar sicher an der Innenwandung im Hohlraum 7 der Verpackung 4 mit der Montagevorrichtung 1 befestigt.

Hierfür hat die Montagevorrichtung 1 einen Grundkörper 8 mit einer Aufnahme 9 für das Bauteil 2.

Eine Saugeinrichtung 10 dient dazu, das in der Aufnahme 9 gehaltene Bauteil 2 mit der gesamten Montagevorrichtung 1 am definierten Ort 3 der Verpackung 4 zu halten.

Eine Presseinrichtung 11 dient dazu, das in der Aufnahme 9 gehaltene Bauteil 2 an den definierten Ort 3 zu pressen.

Die Figur 7 zeigt, dass der Grundkörper 8 einen Höhenanschlag 12 aufweist. Dies ermöglicht es, den Grundkörper 8 zu positionieren, indem der Höhenanschlag 12 an einer oberen Kante 13 der Verpackung 4 eingehängt wird, wodurch auf einfache Art und Weise der Grundkörper 8 in einem definierten Abstand zur Kante 13 angeordnet werden kann.

Um die Position des Grundkörpers 8 zur oberen Kante 13 zu variieren, weist der Höhenanschlag 12 eine Raste 14 auf, dadurch kann fühlbar eine Position des Höhenanschlags 12 relativ zum Grundkörper 8 festgelegt werden.

Das Bauteil 2 muss in der Aufnahme 9 festgehalten werden, um es an den definierten Ort 3 an der Verpackung 4 zu führen, und es muss vom Grundkörper 8 lösbar sein, um an der Verpackung 4 angeklebt zu bleiben, wenn die Montagevorrichtung 1 von der Verpackung 4 gelöst wird. Dazu weist die Aufnahme 9 ein Druckelement 15 auf, das als Passung ausgebildet ist, um das Bauteil 2 mit einer definierten Kraft in der Aufnahme 9 zu halten.

Zusätzlich ist ein Saugelement 16 vorgesehen, dass mit einer Saugkraft das Bauteil 2 in der Aufnahme 9 hält.

Die Aufnahme 9 ist durch ein verschiebbares, rastend am Grundkörper 1 angeordnetes Element in ihrer Breite verstellbar, sodass ein Aufnahmebereich 18 für das Bauteil 2 in seiner Breite verstellbar ist.

Da die gesamte Montagevorrichtung stabil und leicht händelbar sein soll, sind ihre Einzelteile im Wesentlichen aus Kunststoff oder Aluminium hergestellt.

Die Saugeinrichtung 10 besteht aus vier Vakuumflachsaugem 19, 20, 21 und 22, deren Position relativ zum Grundkörper 8 durch Abstandselemente 23 und 24 in definierten Positionen einstellbar ist.

Die gesamte Saugeinrichtung 10 oder die einzelnen Vakuumflachsauger 19, 20, 21 und 22 können auch über ein Gelenk (nicht gezeigt) mit dem Grundköper 8 in Verbindung stehen.

Die Vakuumflachsauer 19, 20, 21 und 22 haben jeweils pneumatische Anschlüsse 25, 26, 27 und 28, die über Leitungen 29 mit einer Unterdruckeinrichtung (nicht gezeigt) in Verbindung stehen. Dadurch ist die Saugeinrichtung pneumatisch bedienbar.

Der Grundkörper 8 der Montagevorrichtung 1 hat einen Griff 30, in dem ein Controller 31 angeordnet ist, der mit der Saugeinrichtung 10 und der Presseinrichtung 11 in Verbindung steht, um Druck und Zeitdauer an der Saugeinrichtung und der Presseinrichtung einzustellen.

Ein Kontaktschalter 32 dient der Aktivierung einer Auslöseeinrichtung 33, die mit dem Controller 31 in Verbindung steht. Dadurch wird erreicht, dass der Controller 31 mit dem Grundkörper 8 eine mobile Einheit 34 bildet, die über die Leitung 29 mit pneumatischen Einrichtungen (nicht gezeigt) verbunden ist und leicht portabel, beispielsweise im Hohlraum 7 einer Verpackung 4 leicht an einem definierten Ort positionierbar ist.

Ein Display 35 zeigt am Griff 30 den vom Controller 31 eingestellten Zustand der Montagevorrichtung 1.

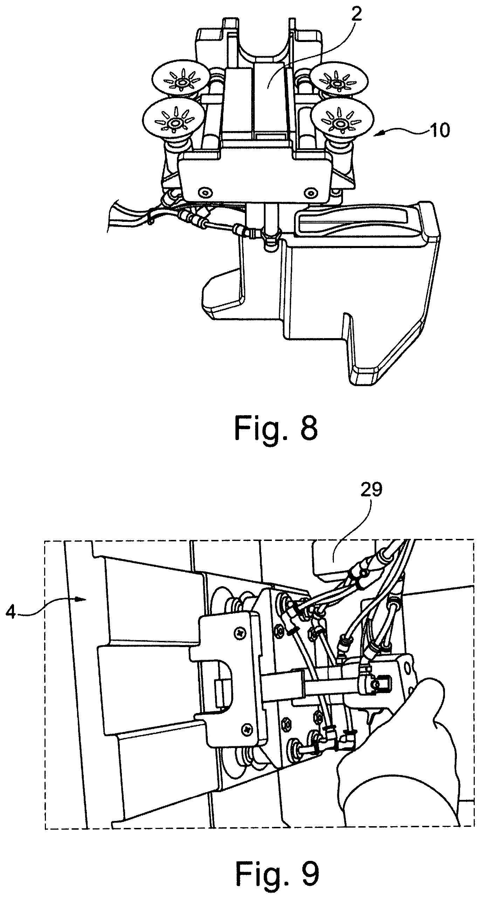

Bei dem in Figur 9 gezeigten Ausführungsbeispiel steht die Montagevorrichtung über mehrere Druckleitungen mit einer pneumatischen Einrichtung in Verbindung. Nach einem nicht gezeigten Ausführungsbeispiel werden die Saugeinrichtung 10 und die Presseinrichtung 11 nur über eine einzige Druckleitung als Versorgungsleitung mit einer pneumatischen Einrichtung verbunden.

Ein ebenfalls nicht gezeigtes Ausfiihrungsbeispiel sieht vor, dass die Saugeinrichtung 10 und/oder die Presseinrichtung 11 mit einem tragbaren Druckbehälter (nicht gezeigt) in Verbindung stehen.

Im gezeigten Ausfiihrungsbeispiel wird gemäß Figur 6 ein Klebstoff 36 als Linie 37 auf das Bauteil 2 aufgebracht. Der Klebstoff 36 kann jedoch auch aufgesprüht werden oder das Bauteil 2 hat bereits eine klebende Oberfläche. In einem nicht gezeigten Ausführungsbeispiel ist eine Auftragseinrichtung (nicht gezeigt) vorgesehen, um den Klebstoff 36 auf das Bauteil 2 oder den definierten Ort 3 aufzubringen. Diese Auftragseinrichtung kann dann mit dem Controller 31 in Verbindung stehen, um Druck oder Zeitdauer des Klebstoffauftrags automatisch einzustellen. Dabei kann diese Auftragseinrichtung als Verteilmechanismus eine Düse (nicht gezeigt) aufweisen und beispielsweise neben der Aufnahme 9 angeordnet sein.

Vorteilhaft ist es, wenn diese Auftragseinrichtung pneumatisch bedienbar ist.

Bei der Verwendung einer derartigen Montagevorrichtung 1 wird zunächst das Bauteil 2 in der Aufnahme 9 positioniert und dort gehalten. Anschließend wird auf das Bauteil 2 ein Klebstoff 36 aufgebracht. Dann wird der Grundkörper 8 mit dem Bauteil 2 am definierten Ort 3 positioniert und mit der Saugeinrichtung präzise am Ort gehalten. Anschließend wird die Aufnahme 9 mit dem Bauteil 2 relativ zum Grundkörper an den definierten Ort 3 bewegt. Anschließend wird das in der Aufnahme 9 befindliche Bauteil 2 mittels einer pneumatischen Einrichtung (nicht gezeigt) relativ zum Grundkörper so an den definierten Ort 3 bewegt, dass der Klebstoff die Verpackung 4 berührt. Dann wird die Aufnahme 9 vom Bauteil 2 abgezogen und der Grundkörper 8 vom Bauteil 2 entfernt.

Die Saugeinrichtung 10 ermöglicht es, den Grundkörper 8 am Ort 3 zu fixieren und die Presseinrichtung 11 ermöglicht es, das Bauteil 2 an den Ort 3 zu drücken bis der Klebstoff 36 abbindet. Nachdem die Aufnahme 9 bereits vom Bauteil 2 abgezogen wurde, kann nach einer definierten Zeit der Druck der Presseinrichtung 11 auf das Bauteil gelöst werden und als letzter Schritt wird der Ansaugdruck der Saugeinrichtung 10 gelöst.

Der gesamte Vorgang kann über den Controller 31 automatisch gesteuert werden. Dabei wird vorzugsweise darauf geachtet, dass der Ansaugdruck der Saugeinrichtung 10 zumindest so stark ist, dass er den Grundkörper 8 auch bei maximalem Druck der Presseinrichtung 11 am definierten Ort hält.

## Patentansprüche

1. Montagevorrichtung (1) zur Befestigung eines Bauteils (2) wie insbesondere einer Halterung (5) an einem definierten Ort (3) mit
einem Grundkörper (8), der eine Aufnahme (9) für das Bauteil (2) aufweist,
einer Saugeinrichtung (10), um das in der Aufnahme (9) gehaltene Bauteil (2) am definierten Ort (3) zu halten und
einer Presseinrichtung (11), um das in der Aufnahme (9) gehaltene Bauteil (2) an den definierten Ort (3) zu pressen,
***dadurch gekennzeichnet, dass** am* Grundkörper (8) mindestens ein Höhenanschlag (12) angeordnet ist, um ihn in einer bestimmten Höhe zu positionieren.

2. Montagevorrichtung nach Anspruch 1, ***dadurch gekennzeichnet, dass*** der definierte Ort (3) innerhalb eines Hohlraums (7) einer Verpackung (4) ist.

3. Montagevorrichtung nach Anspruch 1 oder 2, ***dadurch gekennzeichnet, dass*** der Höhenanschlag (12) eine Raste (14) aufweist, um mindestens eine Rastposition des Höhenanschlags (12) relativ zum Grundkörper (8) festzulegen.

4. Montagevorrichtung nach einem der vorhergehenden Ansprüche, ***dadurch gekennzeichnet, dass*** die Aufnahme (9) ein Druckelement (15) oder ein Saugelement (16) aufweist, um das Bauteil (2) mit einer definierten Kraft in der Aufnahme (9) zu halten.

5. Montagevorrichtung nach einem der vorhergehenden Ansprüche, ***dadurch gekennzeichnet, dass*** die Saugeinrichtung (10) mindestens einen Vakuumflachsauger (19, 20, 21, 22) aufweist, der vorzugsweise über ein Gelenk mit dem Grundkörper (8) in Verbindung steht.

6. Montagevorrichtung nach einem der vorhergehenden Ansprüche, ***dadurch gekennzeichnet, dass*** die Saugeinrichtung (10) mehrere Vakuumflachsauger (19, 20, 21, 22) aufweist, deren Position relativ zum Grundkörper (8), vorzugsweise rastend, in definierten Positionen einstellbar ist.

7. Montagevorrichtung nach einem der vorhergehenden Ansprüche, ***dadurch gekennzeichnet, dass*** sie einen Controller (31) aufweist, wobei vorzugsweise die Saugeinrichtung (10) und/oder die Presseinrichtung (11) mit dem Controller (31) in Verbindung stehen, um Druck und/oder Zeitdauer automatisch einzustellen.

8. Montagevorrichtung nach Anspruch 7, ***dadurch gekennzeichnet, dass*** sie mindestens eine Auslöseeinrichtung (33) aufweist, die mit dem Controller (31) in Verbindung steht, wobei die Auslöseeinrichtung (33) vorzugsweise einen Kontaktschalter (32) aufweist.

9. Montagevorrichtung nach einem der vorhergehenden Ansprüche 7 oder 8, ***dadurch gekennzeichnet, dass*** der Controller (31) mit dem Grundkörper (8) eine mobile Einheit (34) bildet und/oder dass der Controller (31) ein Display (35) aufweist.

10. Montagevorrichtung nach einem der vorhergehenden Ansprüche, ***dadurch gekennzeichnet, dass*** sie für die Saugeinrichtung (10) und die Presseinrichtung (11) nur eine Druckleitung als Versorgungsleitung aufweist.

11. Montagevorrichtung nach einem der vorhergehenden Ansprüche, ***dadurch gekennzeichnet, dass*** die Saugeinrichtung (10) und/oder die Presseinrichtung (11) mit einem tragbaren Druckbehälter in Verbindung stehen.

12. Montagevorrichtung nach einem der vorhergehenden Ansprüche, ***dadurch gekennzeichnet, dass*** sie eine Auftragseinrichtung aufweist, um einen Klebstoff (36) auf das Bauteil (2) oder den definierten Ort (3) aufzubringen, wobei die Montagevorrichtung vorzugsweise einen Controller (31) aufweist und die Auftragseinrichtung vorzugsweise mit dem Controller (31) in Verbindung steht, um Druck und/oder Zeitdauer automatisch einzustellen.

13. Montagevorrichtung nach Anspruch 12, ***dadurch gekennzeichnet, dass*** die Auftragsei nrichtung:
- einen Verteilmechanismus aufweist;
- neben der Aufnahme (9) angeordnet ist; und/oder
- pneumatisch bedienbar ist.

14. Verfahren zur validierbaren Fixierung eines Bauteils (2) wie insbesondere einer Halterung (5) an einem definierten Ort (3), bei dem das Bauteil (2) in eine Aufnahme (9) in einem Grundkörper (8) eingelegt wird, ein Klebstoff (36) vor oder bevorzugt nach dem Einlegen des Bauteils (2) auf das Bauteil (2) aufgebracht wird, der Grundkörper (8) am definierten Ort (3) positioniert und mit einer Saugeinrichtung (10) so am Ort (3) gehalten wird, dass das Bauteil (2) beabstandet zum definierten Ort fixiert wird, mit einer pneumatischen Einrichtung die Aufnahme (9) mit dem Bauteil (2) relativ zum Grundkörper zum definierten Ort (3) bewegt wird, die Aufnahme (9) von dem Bauteil (2) abgezogen wird und der Grundkörper (8) von dem Bauteil (2) entfernt wird,
***dadurch gekennzeichnet, dass*** der Grundkörper (8) mit einem Höhenanschlag am definierten Ort (3) positioniert wird.

15. Verfahren nach Anspruch 14, ***dadurch gekennzeichnet, dass*** der Grundkörper (8) zuerst mit der Saugeinrichtung (10) am Ort (3) fixiert wird, dann mit einer pneumatischen Einrichtung die Aufnahme (9) mit dem Bauteil (2) zum definierten Ort (3) bewegt wird, dann das Bauteil (2) mit einer Presseinrichtung (11) an den Ort (3) gedrückt wird, dann die Aufnahme (9) vom Bauteil (2) abgezogen wird, nach einer definierten Zeit der Druck der Presseinrichtung (11) auf das Bauteil (2) gelöst wird und dann der Ansaugdruck der Saugeinrichtung (10) gelöst wird.

16. Verfahren nach Anspruch 14 oder 15, ***dadurch gekennzeichnet, dass*** der Ansaugdruck der Saugeinrichtung (10) automatisch zeitgesteuert gelöst wird und/oder dass der Ansaugdruck der Saugeinrichtung (10) zumindest so stark ist, dass er den Grundkörper (8) auch bei maximalem Druck der Presseinrichtung (11) am definierten Ort (3) hält.

## Claims

1. Mounting device (1) for fastening a component (2), such as in particular a bracket (5), at a defined location (3) with
a base body (8) which comprises a receptacle (9) for the component (2),
a suction device (10) to hold the component (2) held in the receptacle (9) at the defined location (3) and
a pressing device (11) to press the component (2) held in the receptacle (9) to the defined location (3),
***characterised in that*** at least one height stop (12) is arranged on the base body (8) in order to position it at a specific height.

2. Mounting device according to claim 1, ***characterised in that*** the defined location (3) is within a cavity (7) of a package (4).

3. Mounting device according to claim 1 or 2, ***characterised in that*** the height stop (12) comprises a detent (14) for fixing at least one detent position of the height stop (12) relative to the base body (8).

4. Mounting device according to any one of the preceding claims, ***characterised in that** the* receptacle (9) comprises a pressure element (15) or a suction element (16) to hold the component (2) in the receptacle (9) with a defined force.

5. Mounting device according to any one of the preceding claims, ***characterised in that** the* suction device (10) comprises at least one vacuum flat suction cup (19, 20, 21, 22), which is preferably connected to the base body (8) via a joint.

6. Mounting device according to any one of the preceding claims, ***characterised in that** the* suction device (10) comprises a plurality of vacuum flat suction cups (19, 20, 21, 22), the position of which relative to the base body (8) can be adjusted, preferably in a detent manner, in defined positions.

7. Mounting device according to any one of the preceding claims, ***characterized in that*** it comprises a controller (31), wherein preferably the suction device (10) and/or the pressing device (11) being in connection with the controller (31) for automatically adjusting pressure and/or time duration.

8. Mounting device according to claim 7, ***characterised in that*** it comprises at least one triggering device (33) which is in connection with the controller (31), wherein the triggering device (33) preferably comprises a contact switch (32).

9. Mounting device according to any one of the preceding claims 7 or 8, ***characterised in that*** the controller (31) forms a mobile unit (34) with the base body (8) and/or that the controller (31) comprises a display (35).

10. Mounting device according to any one of the preceding claims, ***characterised in that*** it comprises only one pressure line as supply line for the suction device (10) and the pressing device (11).

11. Mounting device according to any one of the preceding claims, ***characterised in that** the* suction device (10) and/or the pressing device (11) are connected to a portable pressure vessel.

12. Mounting device according to any one of the preceding claims, ***characterised in that*** it comprises application device for applying an adhesive (36) to the component (2) or to the defined location (3), the mounting device preferably comprising a controller (31) and the application device preferably being in connection with the controller (31) for automatically adjusting pressure and/or time duration.

13. Mounting device according to claim 12, ***characterised in that*** the application device:
- comprises a distribution mechanism;
- is arranged adjacent to the receptacle (9); and/or
- can be operated pneumatically.

14. Method for the validatable fixing of a component (2), such as in particular a bracket (5), at a defined location (3), in which the component (2) is inserted into a receptacle (9) in a base body (8), an adhesive (36) is applied to the component (2) before or preferably after the insertion of the component (2), the base body (8) is positioned at the defined location (3) and held at the location (3) by means of a suction device (10) in such a way that the component (2) is fixed at a distance from the defined location, the receptacle (9) with the component (2) is moved relative to the base body to the defined location (3) by means of a pneumatic device, the receptacle (9) is removed from the component (2) and the base body (8) is removed from the component (2),
***characterised in that*** the base body (8) is positioned at the defined location (3) with a height stop.

15. Method according to claim 14, ***characterised in that*** the base body (8) is first fixed at the location (3) with the suction device (10), then the receptacle (9) with the component (2) is moved to the defined location (3) with a pneumatic device, then the component (2) is pressed to the location (3) with a pressing device (11), then the receptacle (9) is removed from the component (2), after a defined time the pressure of the pressing device (11) on the component (2) is released and then the suction pressure of the suction device (10) is released.

16. Method according to claim 14 or 15, ***characterised in that*** the suction pressure of the suction device (10) is automatically released in a time-controlled manner and/or that the suction pressure of the suction device (10) is at least strong enough to hold the base body (8) at the defined location (3) even at maximum pressure of the pressing device (11).

## Revendications

1. Dispositif de montage (1) pour la fixation d'un composant (2) tel que notamment un support (5) à un endroit défini (3), comprenant :
un corps de base (8) qui présente un logement (9) destiné à accueillir le composant (2),
un dispositif d'aspiration (10) destiné à maintenir le composant (2) pris dans le logement (9) à l'endroit défini (3) et
un dispositif de pression (11) destiné à pousser le composant (2) pris dans le logement (9) vers l'endroit défini (3),
**caractérisé en ce que** sur le corps de base (8), au moins une butée de niveau (12) est disposée pour positionner ce premier à un niveau précis.

2. Dispositif de montage selon la revendication 1, **caractérisé en ce que** l'endroit défini (3) est disposé à l'intérieur d'une cavité (7) d'un emballage (4).

3. Dispositif de montage selon la revendication 1 ou 2, **caractérisé en ce que** la butée de niveau (12) présente un cran (14) pour définir au moins une position d'encliquetage de la butée de niveau (12) par rapport au corps de base (8).

4. Dispositif de montage selon l'une des revendications précédentes, **caractérisé en ce que** le logement (9) présente soit un élément de pression (15) soit un élément d'aspiration (16) pour maintenir le composant (2) dans le logement (9) avec une force définie.

5. Dispositif de montage selon l'une des revendications précédentes, **caractérisé en ce que** le dispositif d'aspiration (10) comporte au moins une ventouse plate à vide (19, 20, 21, 22) reliée au corps de base (8), de préférence grâce à une articulation.

6. Dispositif de montage selon l'une des revendications précédentes, **caractérisé en ce que** le dispositif d'aspiration (10) comporte plusieurs ventouses plates à vide (19, 20, 21, 22) dont la position par rapport au corps de base (8) est réglable dans des positions définies, de préférence de manière encliquetable.

7. Dispositif de montage selon l'une des revendications précédentes, **caractérisé en ce qu'**il présente un contrôleur de gestion (31), le dispositif d'aspiration (10) et/ou le dispositif de pression (11) étant de préférence en communication avec le contrôleur de gestion (31) pour régler automatiquement la pression et/ou l'intervalle de temps.

8. Dispositif de montage selon la revendication 7, **caractérisé en ce qu'**il présente au moins une unité de déclenchement (33) en communication avec le contrôleur de gestion (31), l'unité de déclenchement (33) présentant de préférence un interrupteur de contact (32).

9. Dispositif de montage selon l'une des revendications précédentes 7 ou 8, **caractérisé en ce que** le contrôleur de gestion (31) constitue une unité mobile (34) avec le corps de base (8) et/ou **en ce que** le contrôleur de gestion (31) présente un écran (35).

10. Dispositif de montage selon l'une des revendications précédentes, **caractérisé en ce qu'**il ne présente, pour le dispositif d'aspiration (10) et pour le dispositif de pression (11), qu'une conduite sous pression comme conduite d'alimentation.

11. Dispositif de montage selon l'une des revendications précédentes, **caractérisé en ce que** le dispositif d'aspiration (10) et/ou le dispositif de pression (11) est relié / sont reliés à un réservoir sous pression portable.

12. Dispositif de montage selon l'une des revendications précédentes, **caractérisé en ce qu'**il présente une unité d'application destinée à appliquer une colle (36) sur le composant (2) ou sur l'endroit défini (3), le dispositif de montage présentant de préférence un contrôleur de gestion (31) et l'unité d'application étant de préférence reliée au contrôleur de gestion (31) pour régler automatiquement la pression et/ou l'intervalle de temps.

13. Dispositif de montage selon la revendication 12, **caractérisé en ce que** l'unité d'application :
présente un mécanisme de diffusion ;
est agencée à côté du logement (9) et/ou
est apte à être actionnée sur voie pneumatique.

14. Procédé de fixation certifiable d'un élément (2) tel que notamment un support (5) à un endroit défini (3), dans lequel le composant (2) est placé dans un logement (9) dans un corps de base (8), une colle (36) est appliquée sur le composant (2) avant ou, de préférence, après la mise en place du composant (2), le corps de base (8) est positionné à l'endroit défini (3) et maintenu à l'endroit (3) grâce à un dispositif d'aspiration (10) de telle manière que le composant (2) est fixé de manière espacée par rapport à l'endroit défini, le logement (9) est déplacé avec le composant (2), grâce à un dispositif pneumatique, par rapport au corps de base vers l'endroit défini (3), le logement (9) est retiré du composant (2) et le corps de base (8) est éliminé du composant (2),
**caractérisé en ce que** le corps de base (8) est positionné à l'endroit défini (3) grâce à une butée de niveau.

15. Procédé selon la revendication 14, **caractérisé en ce que** le corps de base (8) est d'abord fixé à l'endroit (3) à l'aide du dispositif d'aspiration (10), puis le logement (9) est déplacé vers l'endroit défini (3) avec le composant (2) à l'aide d'un dispositif pneumatique, qu'ensuite, le composant (2) est poussé vers l'endroit (3) à l'aide d'un dispositif de pression (11), qu'ensuite, le logement (9) est retiré du composant (2), la pression appliquée par le dispositif de pression (11) sur le composant (2) est relâchée au bout d'un laps de temps défini et que par la suite, la pression d'aspiration du dispositif d'aspiration (10) est relâchée.

16. Procédé selon la revendication 14 ou 15, **caractérisé en ce que** la pression d'aspiration du dispositif d'aspiration (10) est relâchée automatiquement grâce à une minuterie et/ou **en ce que** la pression d'aspiration du dispositif d'aspiration (10) est au moins suffisamment élevée pour maintenir le corps de base (8) à l'endroit défini (3) même en cas de pression maximale du dispositif de pression (11).
